Europäisches Patentamt

European Patent Office

Office européen des brevets

(19)

(11) Publication number: **0 259 166**
**A2**

(12) # EUROPEAN PATENT APPLICATION

(21) Application number: **87307789.5**

(22) Date of filing: **03.09.87**

(51) Int. Cl.⁴: **E 02 B 3/12**
// **B29C51/00**

(30) Priority: **05.09.86 US 904652**

(43) Date of publication of application:
**09.03.88 Bulletin 88/10**

(84) Designated Contracting States:
**AT BE CH DE ES FR GB GR IT LI LU NL SE**

(71) Applicant: **LEUCADIA,INC.**
**315 Park Avenue South**
**New York NY 10010 (US)**

(72) Inventor: **Slocumb, Robert C.**
**6109 Jeffrey Lane**
**Edina Minnesota (US)**

(74) Representative: **Marlow, Nicholas Simon et al**
**Reddie & Grose 16, Theobalds Road**
**London WC1X 8PL (GB)**

(54) **Plastic matting for erosion control and revegetation.**

(57) Improved geotextile matting comprising flexible three-dimensional extruded thermoplastic net for erosion control and revegetation.

*Fig. 3*

**Description**

## PLASTIC MATTING FOR EROSION CONTROL AND REVEGETATION

This invention relates to erosion control and revegetation matting, sometimes referred to as geotextiles. Such matting has come into use as an alternative to rip wrap and concrete linings for permanent erosion control.

The matting available to date commercially comprises a three-dimensional web of haphazardly entangled thermoplastic monofilaments produced in sheet form. Another kind is several layers of netting bonded together to form a somewhat rigid structure. In use, such matting is spread over ground surface areas on which erosion control, revegetation or both is to be established. Such matting placement on bare ground surfaces provides erosion control since the matting, being flexible, conforms somewhat to the ground surface, remaining in place to shield the soil surface from the erosive forces of wind and rain. The matting also prevents soil, seed and fertilizer from being washed away and provides a relatively rough surface for retaining sediment deposits during run off. During the growth of vegetation, the matting acts as a non-deteriorating mulch which allows uninhibited growth of grass and other vegetation. Additionally, the matting retains moisture and heat necessary for seed germination. Once vegetation growth is established, the matting continues to provide permanent erosion control as it becomes entangled and penetrated by the vegetative growth to become a permanent part thereof.

The matting is particularly useful in areas such as steep slopes, ditches and banks where the demand for erosion control and revegetation is severe because of the unusual erosive forces. Other common areas of use include roadway ditches, pipe outlets, storm channels, pond banks, bridge abutments and the like.

Although the entangled monofilament matting of the prior art has been successful to a degree as an alternative to more expensive traditional approaches to erosion control and revegetation, it has become desirable to provide a product which is more cost-effective. The present invention accomplishes this by substituting extruded flexible single layer thermoplastic netting which has been thermoformed to provide, a three-dimensional configuration in a flexible sheet-like form and which self-conforms readily as a consequence of its own weight to various ground surfaces. Such matting is less costly and is useful in all the same ways as the entangled monofilament form.

The present invention will now be described, by way of example only, with reference to the accompanying drawings, in which:

Fig. 1 is a fragmentary perspective view of the three-dimensional erosion control and revegetation matting of the invention;

Fig. 2 is a sectional side elevation of the matting of Fig. 1 applied over ground which has been seeded with ground covering vegetation;

Fig. 3 is a sectional side elevation of the matting of Fig. 2 showing vegetation sprouting from the ground through the open mesh of the matting;

Fig. 4 is a sectional side elevational view of the matting of Figs. 2 and 3 showing established vegetation, and;

Fig. 5 is a perspective view of a typical installation of matting on a slope of earth with lapped edges and stakes.

In accordance with this invention, flexible material which is thermoformable; is formed into a relatively soft, flexible net sheet by extrusion. Such flexible materials include, for example, Kraton, a thermoplastic rubber, typically styrene-butadiene elastomer manufactured by Shell Chemical Co.; polypropylene/ polyethylene copolymers or other polyethylene based compositions such as low density polyethylene (LDPE), for example, NA251 manufactured by U.S. Industrial Chemicals Co.; very low density polyethylene (VLDPE), for example UCAR FLX manufactured by Union Carbide and EVA copolymers, for example, Ultrathene UE630 manufactured by U.S. Industrial Chemicals Co. The net is then thermoformed to produce a three-dimensional sheet of matting material. When this material is placed in an erosion-prone area, its flexibility ensures its self-conformability to uneven surface conditions to provide resistance to wind displacement and fluid channeling. Water flowing along the surface loses its soil fines to the perforated matrix of the netting due to a combination of filtering action and low velocity flow. The netting perforations permit water to eventually flow freely in all directions. However, the perforations also permit vegetation to grow through the matrix leaving it in place and eliminating future erosion. The structure may be made photo-resistant by adding hindered amines or benzophenones and similar materials. Also, it may be rendered photo-degradable by the addition of various additives as desired. "Poly-grade" degradable concentrates available from Ampacet Corporation are useful for the purpose as are the additives described in U.S. Patent No. 3,994,855.

Extruded netting is already known in the art. It is typically formed by processes such as those described in U.S. Patent Nos. 3,252,181, 3,384,692 and 3,700,521, all of which are incorporated herein by reference.

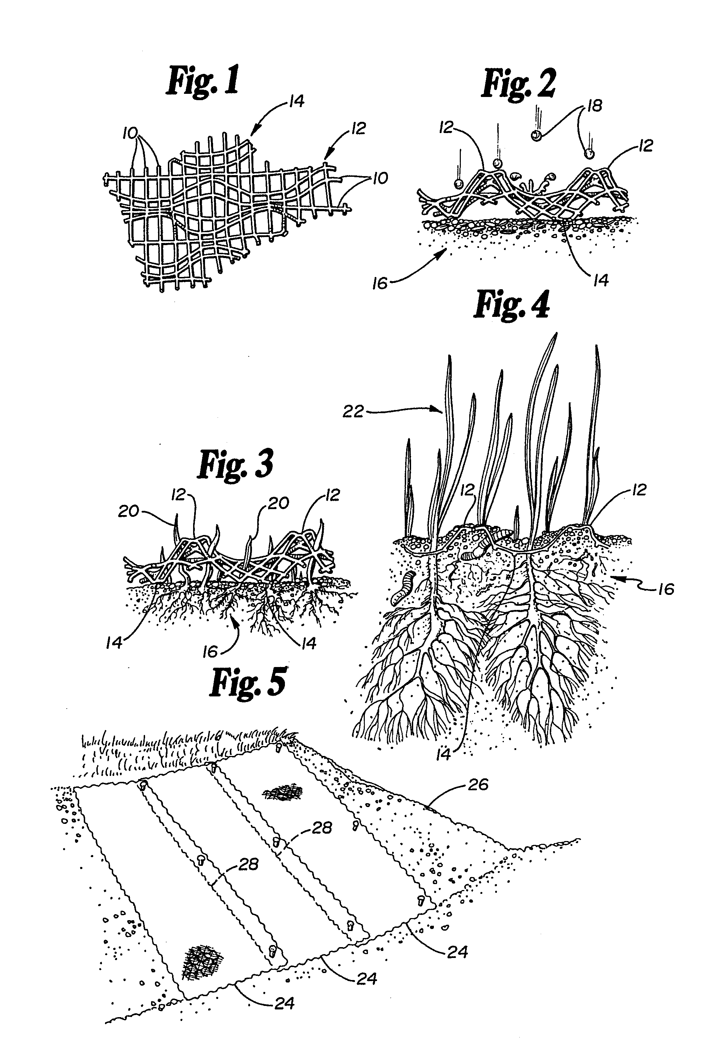

A preferred three-dimensional configuration for the netting of the invention is shown in Figs. 1-4 wherein extruded netting has been thermoformed to provide three-dimensional cuspated net. Fig. 1 shows the transversely disposed extruded strands 10 of such netting arranged in a grid to form the matrix referred to hereinabove, the netting having been deformed to provide a three-dimensional configuration of oppositely extending cusps (raised and depressed areas) generally indicated at 12 and 14, respectively, which provide elevations and depressions on the matting surfaces as can be seen in the Figures.

Cusps 12 and 14 are better seen in Figs. 2-4 which further illustrate the three-dimensional configuration of the netting as it conforms to the ground surface, generally indicated at 16 in Figs. 2-4, on which the matting is placed. As can be seen from these Figures, the self-conforming net matting of the invention readily allows the penetration of rain therethrough to the ground surface, the protrusion of sprouting vegetation and accommodates gradual movement and modification of the earth surface.

Fig. 2 schematically illustrates rain drops 18 penetrating the matting. Fig. 3 schematically illustrates sprouts 20 of vegetation growing through the matting. Fig. 4 schematically illustrates the established vegetation 22, the matting having been generally incorporated into the earth's surface and root structure of the vegetation over time.

A typical installation of the matting of the invention is illustrated in Fig. 5. Individual sheets 24 of the matting have been unrolled onto a sloping ground surface 26 and oriented in the direction of anticipated water flow. The mat lays flat on the earth's surface and conforms thereto by its own weight due to its flexible property. As indicated in the drawings, edges of the mat overlap as shown at 28 and the mat is staked to the slope to be held in place.

Generally, the netting according to this invention for erosion control and revegetation will be preferably made up of from about 3 to 25 strands per inch in each direction. The weight of the netting will be preferably from about 10 pounds per thousand square feet up to about 80 pounds per thousand square feet. Within these ranges, the netting will generally have flexibility and conforming properties satisfactory for conforming to various earthen surfaces. Specifically, it is most preferred that the netting be of 6 to 7 strands per inch and of a weight of about 40 pounds per thousand square feet. The preferred composition is polyethylene or polyethylene based, specifically ethylene vinyl acetate copolymer. The thickness of the matting in the cuspated form is preferably from about one-quarter inch to about two inches in elevation.

In some applications it may be desirable to have multilayer matting made up of a plurality of layers of individual netting which may be thermoformed after the individual netting layers have been brought together or thermoformed prior to the bringing together of the individual netting layers.

Also, the three-dimensional configuration required of the netting may take forms other than the cuspated forms described herein. For example, various configurations of corrugations and other raised and depressed configurations and patterns may be thermoformed into the netting. The preferred form is the cuspated form shown and described herein wherein the cusps may be formed in regular parallel rows or may be irregularly placed or placed in other regular patterns, as desired.

**Claims**

1. A matting for erosion control and revegetation, characterised in that it comprises an extruded thermoplastic planar net sheet of three-dimensional configuration, the net being flexible for self-conforming to surfaces over which it is to be laid.

2. A matting according to claim 1, in which the three-dimensional configuration is obtained by thermoforming the net.

3. A matting according to claim 1 or 2, wherein the three-dimensional structure comprises a plurality of spaced cusp-like structures spreading over and extending from at least one face of the net sheet.

4. A matting according to claim 3, wherein the cusp-like structures extend from opposing faces of the net sheet.

5. A matting according to any preceding claim, wherein the net is comprised of extruded strands.

6. A matting according to claim 5, wherein the strand count of the net in each direction ranges from about 115 strands per metre (3 strands per inch) to about 1000 strands per metre (25 strands per inch).

7. A matting according to claim 6, wherein the strand count of the net is about 235 to 280 strands per metre (6 to 7 strands per inch) in each direction.

8. A matting according to any of claims 5 to 7, wherein the weight of the net ranges from about 0.04 kg per square metre (10 pounds per thousand square feet) to about 0.4 kg per square metre (80 pounds per thousand square feet).

9. A matting according to claim 8, wherein the weight of the net is about 0.2 kg per square metre (40 pounds per thousand square feet).

10. A matting according to any preceding claim, further comprising a plurality of layers of net sheet.

11. A matting according to claim 10, wherein the net is thermoformed before the net layers are combined.

12. A matting according to claim 10, wherein the net is thermoformed after the net layers are combined.

13. A matting according to any preceding claim, wherein the net is a polyethylene based composition.

14. An erosion control and revegetation matting, characterised in that it comprises a flexible extruded thermoplastic perforated sheet of three-dimensional configuration.

0259166

**Fig. 1**

**Fig. 2**

**Fig. 4**

**Fig. 3**

**Fig. 5**